(19) Europäisches Patentamt

European Patent Office

Office européen des brevets

(11) Publication number: **0 231 627 B1**

(12) **EUROPEAN PATENT SPECIFICATION**

(45) Date of publication of patent specification: **15.09.93**  (51) Int. Cl.⁵: **G02B 6/28,** H01S 3/06, H01S 3/091

(21) Application number: **86309721.8**

(22) Date of filing: **12.12.86**

(54) **Single-mode optical communication system.**

(30) Priority: **06.01.86 US 816437**

(43) Date of publication of application:
**12.08.87 Bulletin 87/33**

(45) Publication of the grant of the patent:
**15.09.93 Bulletin 93/37**

(84) Designated Contracting States:
**BE DE FR GB IT NL**

(56) References cited:
**EP-A- 0 103 382**
**EP-A- 0 143 561**
**EP-A- 0 143 583**
**EP-A- 0 144 190**
**GB-A- 2 143 394**

**ELECTRONICS LETTERS, vol. 21, no. 5, 28th February 1985, pages 175-176, Stevenage, Aerts, GB; M.S. WHALEN et al.: "Effectively nonreciprocal evanescent-wave optical-fibre directional coupler"**

(73) Proprietor: **AMERICAN TELEPHONE AND TELEGRAPH COMPANY**
**550 Madison Avenue**
**New York, NY 10022(US)**

(72) Inventor: **Alferness, Rodney Clifford**
**39 Schank Road**
**Holmdel New Jersey 07733(US)**
Inventor: **Wood, Thomas Huntington**
**61 Linden Avenue**
**Highlands New Jersey 07732(US)**

(74) Representative: **Watts, Christopher Malcolm Kelway, Dr. et al**
**AT&T (UK) LTD. AT&T Intellectual Property Division 5 Mornington Road**
**Woodford Green Essex IG8 OTU (GB)**

**Description**

Background of the Invention

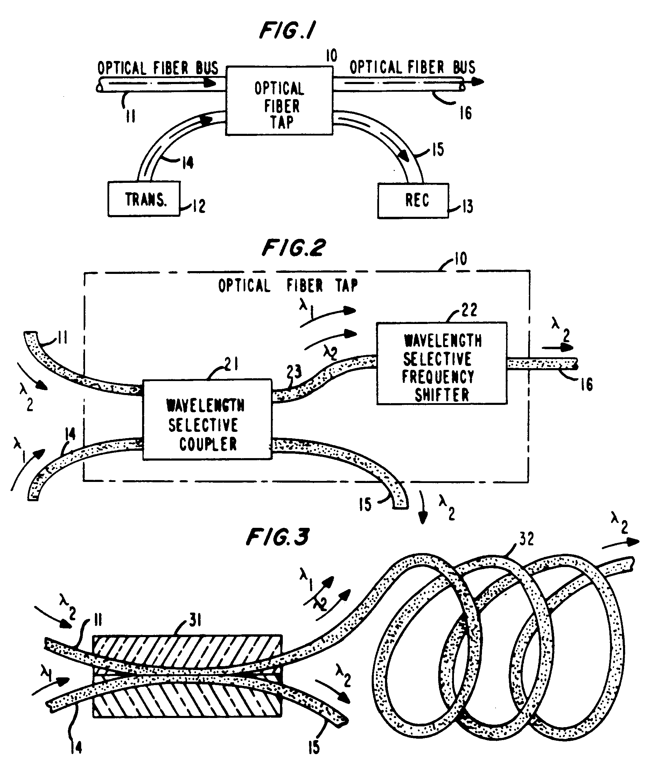

In an optical fiber Local Area Network (LAN), a major figure of merit is the total number of stations that can be put on the network without an active repeater. In most cases, this is limited by the requirement that sufficient optical power be delivered from each transmitter to each receiver on the bus. In an LAN of the type considered, a transmitter 12 and receiver 13 are connected to an optical fiber bus 11 by way of an optical fiber tap 10 as indicated in FIG. 1 of the drawings. In order to couple the power from each transmitter to all of the receivers in the LAN, it is desirable to have each transmitter couple into the bus with unity efficiency and each receiver couple to the bus with a coupling efficiency of order $\frac{1}{N}$ , where N is the number of stations on the bus. Unfortunately, the principle of reciprocity forbids this, since it demands these two coupling coefficients be equal in passive couplers. This leads to very inefficient coupling, a large waste of optical power, and severe limitations on the number of stations that can be coupled to the bus.

It was recently proposed that this problem could be overcome in multimode optical fiber busses through the use of mode-selective coupling between a single-mode fiber and the multimode bus fiber. See the article entitled "Increased power injection in multimode optical fiber busses through mode-selective coupling," IEEE Journal Lightwave Technology, LT-3 537(1985), by T. H. Wood. By coupling the single-mode optical fiber strongly to one or a few modes of the bus fiber, the light from the local transmitter can be efficiently coupled into the bus fiber. However, if the light traveling on the bus has its power uniformly distributed among the modes of the bus, this power will only be weakly tapped out. Calculations indicated that this approach can lead to an increase in injected power of about 7 dB, and an almost doubling of the number of possible stations on the bus. This coupling was experimentally demonstrated in a polished evanescent directional coupler between a 50$\mu$m core multimode fiber and a standard AT&T 5D single-mode fiber. See the article entitled "Effectively nonreciprocal evanescent-wave optical-fiber directional coupler", Electronic Letters, 21, 175(1985), by M.S. Whalen and T.H. Wood. An input coupling efficiency of -0.2 dB and an output coupling efficiency of -18 dB were demonstrated.

However, this approach described hereinabove, has the series drawback that it is only applicable to multimode fiber busses. Future LANs may use single-mode fiber, where much higher bandwidths are possible.

EP-A-0 143 561 discloses a tap incorporated into a fiber optic amplifier for use in a recirculating system. The pumping light has a different wavelength from the signal-carrying light and the coupler employed in the tap couples light at the pumping wavelength with high efficiency and light at the signal-carrying wavelength with low efficiency. The signal-carrying light is thus tapped in and out at low efficiency, but the pumping light is tapped in at high efficiency.

**Summary of the Invention**

An optical fiber tap is provided for a local area network or a fiber bus using a single mode optical fiber in accordance with the present invention, which is defined by the features of claim 1, by combining a wavelength selective coupler with a wavelength selective optical frequency shifter which in combination provide effectively non-reciprocal injection and removal of power at each node of the local area network. The wavelength selective coupler is designed to couple power from the transmitter at a first wavelength with maximum efficiency into the optical fiber bus and to couple power at a second wavelength from this bus into a receiver with much lower efficiency. The power at the output of the wavelength selective coupler from the transmitter is shifted in frequency to the second wavelength by the wavelength selective frequency shifter while leaving the second wavelength unchanged in frequency.

In the specific embodiment disclosed a wavelength selective coupler is combined with a neodymium-doped silica fiber which acts as a nonlinear material in converting light from a first wavelength to light at a second wavelength while leaving light at the second wavelength unchanged. Light at the output of the neodymium-doped fiber is only at the second wavelength and it may be coupled to the next wavelength selective coupler in the local area network.

Brief Description of the Drawing

The invention will be more readily understood after reading the following detailed description in combination with the drawings, wherein

FIG. 1 is a block diagram of a node in a local area network of the type which could utilize the present invention;

FIG. 2 is a block diagram of an optical fiber tap constructed in accordance with the present invention;

FIG. 3 is a more detailed diagram of an embodiment of the present invention which uses a neodymium-doped silica fiber as the wavelength selective frequency shifter; and

FIGS. 4 through 6 are curves and energy diagrams useful in describing the operation of the present invention.

Detailed Description

An optical fiber tap that can be used in a single mode optical fiber system is shown in block diagram form in FIG. 2. The wavelength selective coupler 21 in FIG. 2 is connected to receive a light signal at wavelength $\lambda_2$ on an optical fiber bus 11 at one of its input ports and to receive a light signal at wavelength $\lambda_1$ from the transmitter by way of optical fiber 14 at a second input port. The wavelength selective coupler 21 is designed such that it has a strong coupling $n_t$ at a wavelength $\lambda_1$ and a weak, but nonzero, coupling $n_r$ at wavelength $\lambda_2$. Accordingly, the light at wavelength $\lambda_1$ from the transmitter will be strongly coupled through to the output port of wavelength selective coupler 21 that is connected to optical fiber 23, and the light at wavelength $\lambda_2$ on the optical fiber bus 11 will only be weakly coupled to a second output port of the wavelength selective coupler 21 that is connected by optical fiber 15 to the receiver. Optical fiber 23 carrying both the light at wavelength $\lambda_1$ and the remaining light at wavelength $\lambda_2$ is connected to a wavelength selective frequency shifter 22. This frequency shifter 22 is designed to have the property that it converts light at wavelength $\lambda_1$ to wavelength $\lambda_2$ efficiently but leaves the light at wavelength $\lambda_2$ unchanged.

The optical fiber tap of FIG. 2 provides effective nonreciprocal coupling of light into and out of the optical fiber bus. The light at wavelength $\lambda_1$ from the transmitter is coupled onto the bus through the wavelength selective coupler 21 with an efficiency $n_t$ which is close to unity. This light at wavelength $\lambda_1$ is then converted into light at wavelength $\lambda_2$ by the wavelength selective frequency shifter 22. As indicated hereinabove, any light at wavelength $\lambda_2$ passes through the frequency shifter 22 virtually unchanged and is therefore present to be coupled out to a local receiver at the next node. As a result, light from the transmitter on optical fiber 14 can be efficiently launched onto the optical fiber bus 23 and converted to wavelength $\lambda_2$ such that only a small fraction of it will be removed at each node in a local area network.

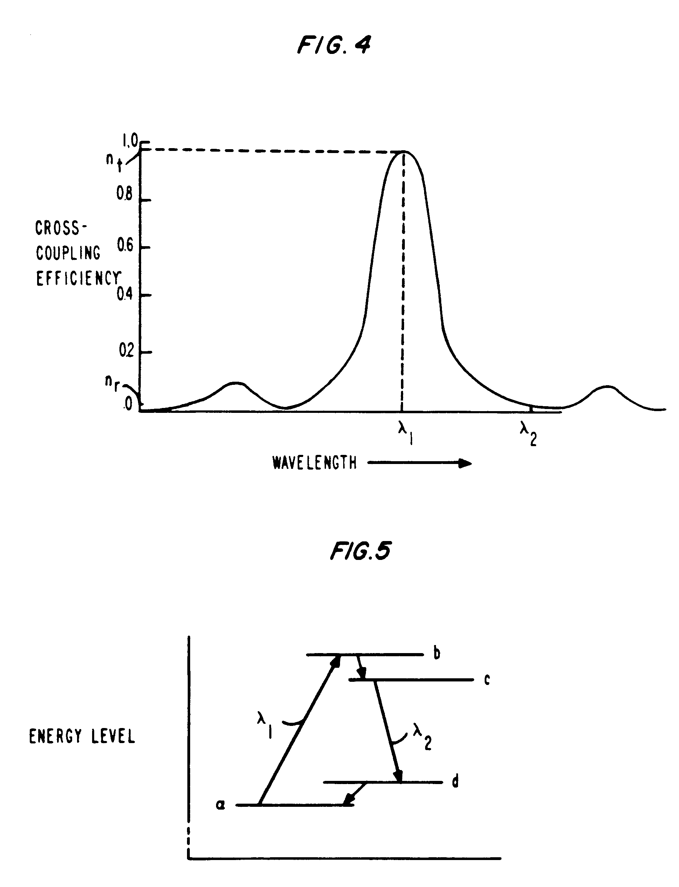

As indicated in FIG. 2, the optical fiber tap 10 need be constructed with only two components: a wavelength selective directional coupler and a wavelength selective frequency shifter. Various type devices can be used to implement both of these major functions in the optical fiber tap 10. One specific embodiment of the optical fiber tap is shown in FIG. 3.

In FIG. 3 the wavelength selective coupler 21 has been implemented by a polished directional coupler made from two dissimilar single mode fibers. Such a coupler can be found in the article entitled "In-line optical-fiber filter for wavelength multiplexing," Electronic Letters, 21,724(1985) by M. S. Whalen and K. L. Walker. An analysis of this type coupler has been presented in the article entitled, "Directional-coupler filter using dissimilar optical fibres," Electronic Letters, 21,726(1985), by D. Marcuse. This analysis permits the designer to position the wavelength at which maximum coupling is desired and to shape the skirts of the coupling efficientcy curve such that the desired low efficiency of cross-coupling can be achieved at the wavelength $\lambda_2$. A typical waveform of coupling efficiency versus wavelength for this type of directional coupler is shown in FIG. 4. As illustrated in FIG. 4 light at wavelength $\lambda_1$ is cross-coupled at an efficiency $n_t$ which is close to unity, whereas light at wavelength $\lambda_2$ is cross-coupled at a low efficiency close to but not equal to zero. In the system which is illustrated in FIG. 3, the coupler was designed to achieve maximum cross coupling at a wavelength of .8 microns and a low efficiency coupling at a wavelength $\lambda_2$ equal to 1.06 microns.

To provide the wavelength selective frequency shifting function in the embodiment of FIG. 3 a neodymium-doped silica single mode optical fiber 32 is shown. These neodymium-doped glasses have a strong absorption band at a wavelength equal to 0.8 micrometers and can be made to emit light at wavelengths equal to 1.066 micrometers. As indicated in the analysis which follows a sufficient amount of light at 0.8 micrometers can result in a high conversion efficiency of the photons at $\lambda_1$ to photons at $\lambda_2$.

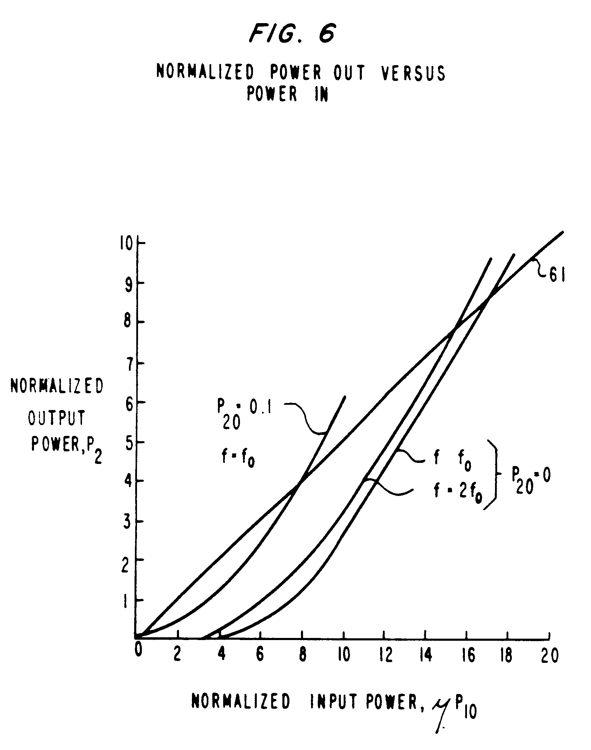

The energy level diagram for neodymium-doped silica is shown in FIG. 5. In FIG. 5 the levels a and b represent the absorption band at the wavelength $\lambda_1$ equal to 0.8 micrometers in that light at wavelength $\lambda_1$ will cause the neodymium-doped ions to change their state from energy level a to energy level b. These ions then undergo a nonradiative fast decay from level b to level c and then emit light when undergoing the transition from level c to level d. Finally, the ions undergo a fast nonradiative decay from level d to level a. These nonradiative decays occur on a time scale much faster than the other two processes considered

herein.

If $I_1(x)$ represents the photon flux at a position x in the fiber at wavelength $\lambda_1$, and $I_2(x)$ represents the photon flux at a position x in the fiber at a wavelength $\lambda_2$, expressions for the photon flux and for the population of the excited ions, N(x), at level c can be written. Assuming that the pump transition is not saturated and therefore that the population at level a, $N_o$, is not significantly changed by the conversion process, the equations can be represented as follows:

$$I_1(x) = I_{10} \exp(-N_o \alpha_1 x) \qquad (1)$$

$$\frac{dI_2}{dx} = \alpha_2 N(x) I_2(x) + \frac{fN(x)}{\tau_2} \qquad (2)$$

$$\frac{dN}{dt} = 0 = \eta N_o \alpha_1 I_1(x) - \alpha_2 N(x) I_2(x) - \frac{N(x)}{\tau_2} \qquad (3)$$

where $\alpha_1$ and $\alpha_2$ are the small-signal absorption coefficients for the pump and lasing transitions respectively, $\tau_2$ is the spontaneous emission time for level c, N is the quantum efficiency of the pump transition, $I_{10}$ is the photon flux at $\lambda_1$ injected into the fiber at x = o, and f is the fractional solid angle that the fiber core subtends. Loss in the fiber is not included in these equations.

To determine the conversion efficiency of this process we solve equations 1-3 to obtain a relationship between the converted flux $I_2(x)$ and the input flux $I_{10}$.

$$\eta(I_{10}\tau_2\alpha_2)(1-\exp(-N_o\alpha_1 x)) = (I_2(x) - I_{20})\tau_2\alpha_2$$

$$+ (1-f) \ln \frac{I_2(x)\tau_2\alpha_2 + f}{I_{20}\tau_2\alpha_2 + f} \qquad (4)$$

where $I_{20}$ is the input flux at the lasing wavelength. A small amount of flux injected at $\lambda_2$ ($I_{20}$) can significantly decrease the amount of pump power required for a given conversion efficiency. We note that in equation (4) all fluxes $I_{10}$, $I_1$, $I_{20}$ are multiplied by $\tau_2 \alpha_2$, indicating that

$$I_c = \frac{1}{\tau_2\alpha_2}$$

is a natural unit for measuring photon flux in this problem. Physically, $I_c$ represents the minimum input flux required at the pump wavelength for stimulated emission to dominate the conversion process in the fiber. Equation (4) can then be rewritten in terms of dimensionless powers resulting in the following equation:

$$\eta P_{10} = P_2 - P_{20} + (1-f) \ln \frac{P_2 + f}{P_{20} + f} \qquad (5)$$

where $P_{10} = I_{10}/I_c$, $P_{20} = I_{20}/I_c$, $P_2 = I_2/I_c$ and the limit (x) has been taken to estimate the conversion frequency.

A reasonable value for f for a single mode fiber is $1.9 \times 10^3 (= f_o)$, this corresponds to the fiber subtending a ten degree angle (full width). In FIG. 6, equation 5 is plotted. The normalized converted power, $P_2$ is plotted as a function of the normalized input power $\eta P_{10}$ for various values of $P_{20}$ and f. The intersection of the straight line 61 with these curves indicates the input power, $\eta P_{10}$ where 3 dB conversion efficiently occurs. With no injected power at $\lambda_2$ ($P_{20} = 0$), $\eta P_{10}$ at 3db is about 16.5 for $f = f_o$ and $\eta P_{10}$ at 3db is about 14.5 for $f = 2f_o$ indicating that the calculation is not sensitive to the exact value of f. However when a small amount of light at $\lambda_2$ is injected such that $P_{20} = 0.1$, $\eta P_{10}$ at 3db is less than 8 (for $f_o = f_o$), resulting in a nearly 3 dB decrease of the necessary input pump power. This indicates that injection of an "idler" beam at $\lambda_2$ may be a convenient way to decrease the necessary input pump power.

To convert the normalized powers from FIG. 4 to milliwatts we need $\tau_2 \, \alpha_2$ which can be expressed in terms of the following equation:

$$\tau_2 \alpha_2 = \frac{\lambda_2^2}{8\pi n^2 \Delta \nu} \tag{6}$$

where $\Delta \nu$ is the linewidth of the gain in $\text{sec}^{-1}$ and n is the index of refraction of the medium. For $\text{Nd}^{+3}$-doped silica fiber $\Delta \nu = 200 \text{cm}^{-1}$ which yields

$$I_c = \frac{1}{\alpha_2 \tau_2} = 3.39 \times 10^{22} \frac{1}{\text{cm}^2 \text{sec}} .$$

In a $9\mu\text{m}$ diameter fiber at a pump wavelength of $.8\mu$, this represents a power of $P_c = 5.36 \text{mW}$. The appropriate value for the absorption quantum efficiency ($\eta$) is about 0.4. The values of $P_{10}$ at 3db discussed in the last paragraph can now be translated into mW. When no idler beam is present at $\lambda_2$, $P_{10}$ at 3db is equal to 225mw which can be lowered to 100mw by injecting an idler with power of about 0.5mw.

Although a specific embodiment has been described numerous other devices can be used to implement the directional coupler and frequency shifting functions required in the optical fiber tap. For example, other forms of wavelength selective couplers can be utilized and the frequency shifting function can be provided by mode conversion in a birefringent crystal, for example lithium niobate. See, for example, the article entitled "Integrated-optical frequency translator with stripe waveguide," Applied Physics Letters, 45(5), 1 Sept. 1984, by F. Heismann and R. Ulrich. The mode conversion devices of the type described in the latter article require periodic electrodes and therefore are inherently wavelength selective. Accordingly, they can be constructed such that they are effective in shifting the frequency in the band of their effectiveness while leaving frequencies that are out of the band unchanged.

## Claims

1. An optical communication system comprising an optical fiber bus having a plurality of optical fiber taps, each said tap comprising

first input and first output means connecting said optical fiber taps in series with the optical bus fiber (11,16), a second input means (14) arranged to receive signal-carrying light from an optical transmitter, a second output means (15) arranged to deliver signal-carrying light to an optical receiver, and

single mode coupler means (21) arranged to receive light from said first and second input means and to deliver light to said first and second output means for cross-coupling light having a first wavelength with high efficiency and for cross-coupling light having a second wavelength with lower efficiency,

CHARACTERISED IN THAT

said optical transmitter provides light at said first wavelength and in that said single mode coupler means is arranged to deliver light to said first output means via single mode wavelength conversion means (22) arranged to convert light having said first wavelength to light having said second wavelength while passing substantially unchanged light having said second wavelength.

2. An optical communication system as defined in claim 1

CHARACTERIZED IN THAT

said single mode coupler means comprises a polished directional coupler having two single mode fibers that are rigidly affixed to be proximate to each other for a length that provides evanescent coupling between the fibers.

**3.** An optical communication system as defined in claim 1
CHARACTERIZED IN THAT
said single mode conversion means comprises a neodymium-doped silica fiber.

**Patentansprüche**

**1.** Optisches Übertragungssystem mit einem optischen Faserbus mit einer Vielzahl von Faseranzapfungen, die je aufweisen
eine erste Eingangs- und eine erste Ausgangseinrichtung, die die Faseranzapfungen in Reihe mit dem optischen Faserbus (11,16) schalten, einer zweiten Eingangseinrichtung (14), die so angeordnet ist, daß sie signal-tragendes Licht aus einem optischen Sender empfängt, eine zweite Ausgangseinrichtung (15), die so angeordnet ist, daß sie signal-tragendes Licht an einen optischen Empfänger abgibt und
eine Einzelmoden-Koppeleinrichtung (21), die so angeordnet ist, daß sie Licht aus der ersten und der zweiten Eingangseinrichtung empfängt und Licht an die erste und die zweite Ausgangseinrichtung abgibt, um Licht mit einer ersten Wellenlänge bei hohem Wirkungsgrad und Licht mit einer zweiten Länge bei niedrigem Wirkungsgrad kreuz zu koppeln,
dadurch gekennzeichnet, daß
der optische Sender Licht mit der ersten Wellenlänge liefert und daß die Einzelmoden-Koppeleinrichtung so angeordnet ist, daß sie Licht an die erste Ausgangseinrichtung über eine Einzelmoden-Wellenlängenumwandlungseinrichtung (22) liefert, die Licht mit der ersten Wellenlänge in Licht mit der zweiten Wellenlänge umwandelt und Licht mit der zweiten Wellenlänge im wesentlichen unverändert durchläßt.

**2.** Optisches Übertragungssystem nach Anspruch 1,
dadurch gekennzeichnet, daß
die Einzelmoden-Koppeleinrichtung einen polierten Richtungskoppler mit zwei Einzelmoden-Fasern umfaßt, die so festgelegt sind, daß sie nahe beieinander in einem Abstand angeordnet sind, der eine evaneszente Kopplung zwischen den Fasern ergibt.

**3.** Optisches Übertragungssystem nach Anspruch 1,
dadurch gekennzeichnet, daß
die Einzelmoden-Umwandlungseinrichtung eine mit Neodym dotierte Quarzglasfaser umfaßt.

**Revendications**

**1.** Un système de communication optique comprenant un bus à fibre optique ayant un ensemble de prises à fibre optique, chaque prise comprenant :
des premiers moyens d'entrée et des premiers moyens de sortie, connectant les prises à fibre optique en série avec la fibre de bus optique (11, 16), des seconds moyens d'entrée (14) conçus pour recevoir de la lumière porteuse de signal provenant d'un émetteur optique, des seconds moyens de sortie (15) conçus pour fournir de la lumière porteuse de signal à un récepteur optique, et
des moyens coupleurs monomodes (21) conçus pour recevoir de la lumière provenant des premiers et seconds moyens d'entrée, et pour fournir de la lumière aux premiers et seconds moyens de sortie, de façon à transmettre en couplage croisé, avec un rendement élevé, de la lumière ayant une première longueur d'onde et à transmettre en couplage croisé, avec un rendement plus faible, de la lumière ayant une seconde longueur d'onde,
CARACTERISE EN CE QUE
l'émetteur optique produit de la lumière à la première longueur d'onde, et en ce que les moyens coupleurs monomodes sont conçus de façon à fournir de la lumière aux premiers moyens de sortie par l'intermédiaire de moyens de conversion de longueur d'onde monomodes (22) qui convertissent la lumière ayant la première longueur d'onde en lumière ayant la seconde longueur d'onde, tout en transmettant de façon pratiquement inchangée la lumière ayant la seconde longueur d'onde.

**2.** Un système de communication optique selon la revendication 1,
CARACTERISE EN CE QUE
les moyens coupleurs monomodes comprennent un coupleur directionnel poli ayant deux fibres monomodes qui sont fixées de façon rigide à proximité l'une de l'autre, sur une longueur qui produit un couplage par champ évanescent entre les fibres.

3. Un système de communication optique selon la revendication 1,
CARACTERISE EN CE QUE
les moyens de conversion monomodes comprennent une fibre en silice dopée au néodyme.

FIG.1

FIG.2

FIG.3

*FIG. 4*

*FIG.5*

# FIG. 6

## NORMALIZED POWER OUT VERSUS POWER IN

NORMALIZED OUTPUT POWER, $P_2$

$P_{20} = 0.1$

$f = f_0$

$\left. \begin{array}{l} f \quad f_0 \\ f = 2f_0 \end{array} \right\} P_{20} = 0$

61

NORMALIZED INPUT POWER, $\gamma P_{10}$